# EUROPEAN PATENT APPLICATION

(11) **EP 2 180 386 A1**
(43) Date of publication of application: **28.04.2010**
(21) Application number: 08167525.8
(22) Date of filing: 24.10.2008
(51) Int. Cl.: G05B 11/42

(54) **Control device and method for operating a control device**

(71) Applicant: ABB Research Ltd., 8050 Zürich (CH)
(72) Inventor: Kieferndorf, Frederick, 5442 Fislisbach (CH)
(74) Representative: ABB Patent Attorneys

(57) **Abstract**

The invention relates to a control device for feedback control of a system, comprising:
- a proportional portion (2) for providing a proportional value (P) depending on an actual input value (act) indicating an actual state of the system and on a reference input value (ref) indicating a desired state of the system;
- an integrator portion (3, 3') having at least one integrator unit (33) for integrating a value depending on the actual input value (act) and the reference input value (ref) to obtain an integrator value (I) ;
- a limiting means (6) for limiting a control output, wherein the control output is determined based on the proportional value (P) and the integrator value (I) ;
- an anti-windup unit (7) for resetting the integrator unit to a predetermined value if the limiting means (6) is actually limiting the control output.

## Description

### Technical Field

The present invention is related to a control device having an integrator portion and in particular a control device where the output is limited. The present invention further relates to operating the integrator portion of a control device to avoid windup.

### Prior art

Control devices having an integrator portion are well known in the art. Common control devices are PI controllers (P: proportional, I: integral) or PID controllers (P: proportional, I: integral, D: derivative). In general, the integrator portion integrates the difference between an actual input value and a reference input value and provides the integrator value to a summing unit to contribute to the control device output.

In some physical systems the output of the control device is further limited by a limiter unit or by the physical system itself to be controlled. In case of motor drives the maximum torque output is limited by the allowable current, normally imposed by the semiconductor switching devices of the inverter stage.

The use of the integrator portion in a control device can lead to a so called integrator windup wherein the integrator value rises or falls to a value which essentially contributes to the output of the control device. In such a case the response of the control device following a sudden change of the actual input value and/or the reference input value of the control device is very poor. This behavior is called integrator windup.

To avoid an infinite windup of the integrator portion the integrator value of the integrator portion is limited to predetermined thresholds to reduce the possible contribution of the integrator portion to the overall control device output.

However, the main issue of the above and most of the other methods used is that one or more parameters must be tuned to achieve an adequate response. For example the limitation of the integrator portion must be properly selected to optimize the performance of the control device. In case the anti-windup limitation of the integrator value is not properly set rapid speed changes of a motor drive control by such a control device will not have a satisfactory dynamic performance.

### Description of the invention

It is therefore an object of the present invention to prevent integrator windup in a control device having a limited output wherein no parameter must be tuned for the integrator portion to achieve an adequate response of the control device.

This object is achieved by the control device according to claim 1 and by the method for operating a control device according to the further independent claim.

Further embodiments of the present invention are indicated in the related subclaims.

According to a first aspect a control device is provided for feedback control of a system, comprising:
- a proportional portion for providing a proportional value depending on an actual input value indicating an actual state of the system and on a reference input value indicating a desired state of the system;
- an integrator portion having at least one integrator unit for integrating a value depending on the actual input value and the reference input value to obtain an integrator value;
- a limiting means for limiting a control output, wherein the control output is determined by means of the proportional value and the integrator value;
- an anti-windup unit for resetting the integrator unit to a predetermined value if the limiting means is actually limiting the control output.

According to an embodiment, the anti-windup unit is provided to reset the integrator unit to a predetermined value if the absolute value of a limiting difference, indicating the limiting by the limiting means, is more than the absolute value of the integrator value.

The limiting means may be a limiter unit limiting the control output according to a predetermined range or the limiting means may be included in the system to be controlled wherein the limiting difference is predetermined or provided by the system.

The above control device serves the integrator windup problem by resetting the integrator unit of the integrator portion when a limitation of the control output is active, i.e. when the control output has reached or exceeded the limitation of the limiting means, i.e. of the limiter unit or of the physical system.

When the integrator portion is reset just when the limit is reached the control device output will suddenly change. This might result in an oscillatory behavior of the controlled system. To avoid such an oscillation it may be provided that the integrator portion is only reset when the absolute value of the difference between the control output and the limited control device output is larger than the absolute value of the integrator portion. In this case, the output of the limited control device remains unaffected by the resetting of the integrator portion.

Furthermore, the limiting difference may be calculated by means of the control output and the limited control output.

Moreover, the control device further may include a derivative portion for differentiating a value depending on the actual input value and the reference input value to obtain a derivative value, wherein the control device output is calculated depending on the derivative value.

Furthermore, a summing unit may be provided to determine the control output by at least summing up the proportional value and the integrator value.

According to a further embodiment the integrator portion may have two or more integrator units which are arranged in an cascaded manner.

According to a further aspect it is provided a control system comprising:
- the above control device; and
- a system to be controlled.

According to a further aspect it is provided a method for operating a control device for feedback controlling a system, comprising the steps of:
- providing a proportional value depending on an actual input value indicating an actual state of the system and on a reference input value indicating a desired state of the system;
- integrating a value depending on the actual input value and the reference input value to obtain an integrator value;
- limiting a control output, wherein the control output is determined by means of the proportional value and the integrator value;
- resetting the integrated value to a predetermined value if the limiting of the control output changes the value of the control output.

Moreover, the resetting of the integrated value to a predetermined value can be carried out if the absolute value of a limiting difference, indicating the limiting by the limiting means, is more than the absolute value of the integrator value.

### Brief description of the drawings

Sample embodiments of the present invention are described in detail in conjunction with the accompanying drawings, in which:
Fig. 1 shows a first embodiment of a control device;
Fig. 2 shows a flow chart illustrating the method for operating the control device; and
Fig. 3 shows a second embodiment of a control device.

The reference symbols used in the drawing and their meanings are listed in a summarized form in the list of reference symbols. In principle, identical parts are provided with the same reference symbols in the figures. The described embodiments represent examples of the subject matter of the invention, and have no restrictive effect.

### Ways to implement the invention

In the following description embodiments of the present invention are described in detail wherein similar reference symbols refer to elements having the same or similar function.

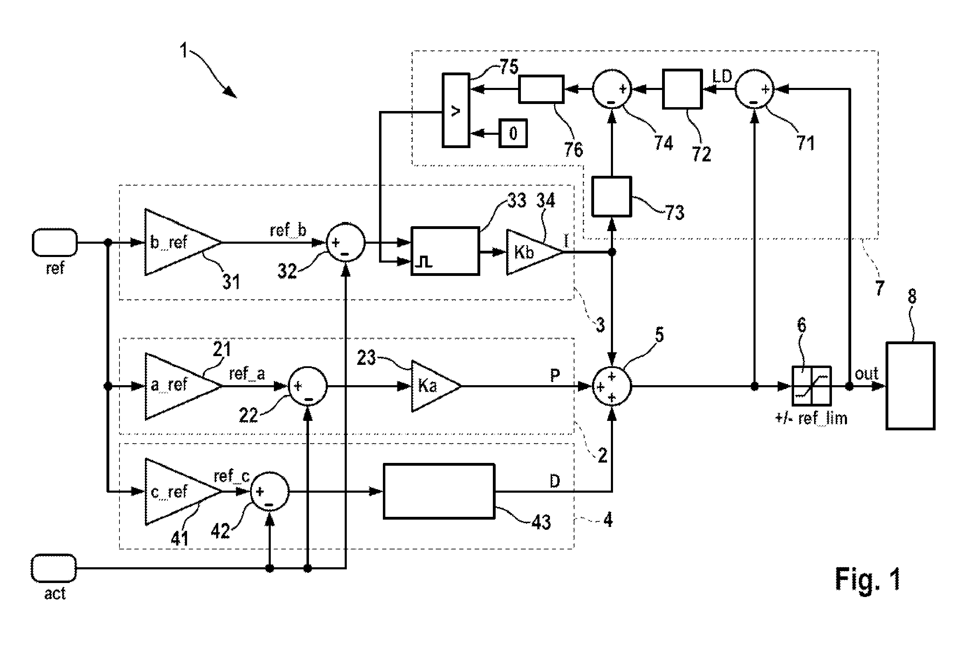

Fig. 1 shows a control device 1 having a proportional portion 2, an integrator portion 3 and an derivative portion 4. The portions 2, 3, 4 provide a respective partial output value, i.e. a proportional value P, an integrator value I, and a derivative value D, respectively, which are summed up in a summing unit 5 to provide a controller output. The controller output is supplied to a limiter unit 6 which limits the controller output with at least one limitation value ref lim to provide a limited controller output out. Inputs of the control device 1 are a reference input value ref and an actual input value act.

In general, such a control device 1 can be applied to any system, e.g. to a motor to control its speed or its position. In this example, the input values can refer to an electric current I, a rotational speed m of the motor or the position ψ of the motor.

The proportional portion 2 includes a first amplification unit 21 to amplify the reference input value ref with a first amplification factor a_ref. The so obtained first amplified reference input value ref_a is supplied to a first difference unit 22 to subtract the actual input value act from the first amplified reference input value ref_a. The result of the subtraction in the first difference unit 22 is provided to a first multiplication unit 23 which multiplies the difference between the amplified reference input value ref_a and the actual input value act with a predetermined proportional factor Ka. The so obtained proportional value P is provided to the summing unit 5.

The integrator portion 3 includes a second amplification unit 31 to amplify the reference integral ref with a second amplification factor b_ref to obtain a second amplified reference input value ref_b. The second amplified reference input value ref_b is supplied to a second difference unit 32 to which also the actual input value act is supplied to provide a difference between the second amplified reference input value ref_b and the actual input value act. The so obtained difference value is supplied to an integrator unit 33 which integrates the difference values over time. The integrated value as output of the integrator unit 33 is provided to a second multiplication unit 34 to multiply the output of the integrator unit 33 with a integrator factor Kb which represents the integrator constant. The output of the second multiplication unit 34 is provided as the integrator value I to the summing unit 5.

The derivative portion 4 has a third amplification unit 41 to amplify the reference input value ref with a third amplification factor c_ref to obtain a third amplified reference input value ref_c. The amplified reference input value ref_c is supplied to a third difference unit 42 to which the actual input value act is also supplied. The difference value calculated by the third difference unit 42 is supplied to a derivative block 43 in which the calculated difference value is differentiated over time to provide a derivative value D to the summing unit 5.

The sum of the proportional value P, the integrator value I and the derivative value D represents a control output as an unlimited control device output.

The limiter unit 6 limits the control output to a value range which is, in the described embodiment, spanned between the negative limitation value -ref_lim and the positive limitation value +ref_lim. It may also be provided, that the quantities of the positive and the negative limitation values are different from each other.

The first to third amplification factors a_ref, b_ref, c_ref applied by the first to third amplification units 21, 31, 41 represent parameters of the control device and can be set e.g. in a calibration process which is not further described herein. The settings of the first to third amplification factors a_ref, b_ref, c_ref are to adapt the control device to the system constraints. Each of the amplification factors a_ref, b_ref, c_ref can be set to 1 in which case the respective amplification unit 21, 31, 41 can be omitted as well.

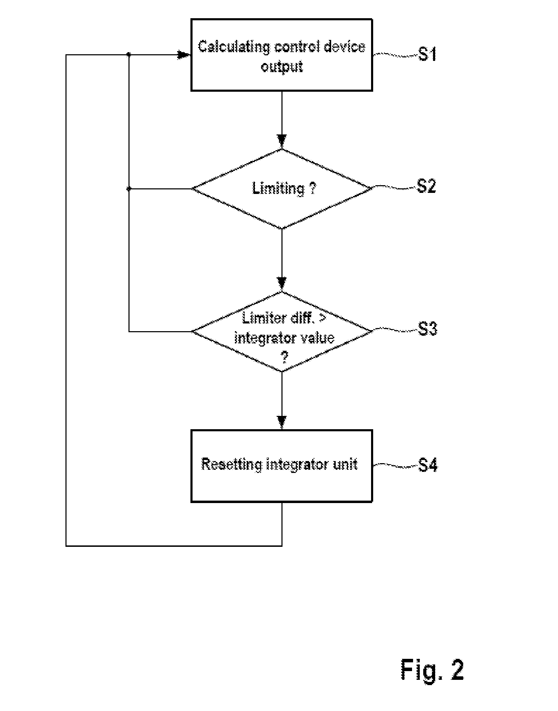

Furthermore, an anti-windup unit 7 is provided to prevent integrator windup when the control device output out is limited by the limiter unit 6. The function of the anti-windup unit 7 is described in conjunction with the flow chart of Fig. 2.

The anti-windup process is performed in cycles. In a first step S1 the control device output as obtained from the summing unit 5 is calculated. The anti-windup unit 7 then detects (step S2) if the limiter unit 6 actively limits the control device output from the summing unit 5. This can be achieved by calculating a limiter difference between the limited control device output out and the unlimited control output as provided by the summing unit 5 in a first anti-windup subtraction unit 71. If the difference is not 0, a limiting is being carried out by the limiter unit 6, otherwise no limiting is being carried out.

Instead of the first anti-windup subtraction unit 71 it can also be provided that the limiter unit 6 or the physical system 8 itself provides a limitation signal indicating if a limitation is active or not and indicating the limiter difference between the unlimited control output and the limited control device output or the limitation of the physical system, respectively.

In case it is determined that a limiting is being carried out the process is continued with step S3 otherwise processing returns to step S1.

In the step S3 it is determined whether the effect of the limiting of the limiter unit 6 changes the control output more than the integrator value I, i.e. the absolute value of the limiter difference is more than the absolute value of the integrator value I. This is achieved by a first absolute value unit 72 to calculate the absolute value of the limiter difference provided by the first anti-windup subtraction unit 71 and a second absolute value unit 73 to calculate the absolute value of the integrator value I. The absolute value of the limiter difference output by the first anti-windup subtraction unit 71 and the absolute value of the integrator value I are supplied to a second anti-windup subtraction unit 74 to calculate an anti-windup difference.

The anti-windup difference is supplied via a delay unit 76 to delay the provision of the anti-windup difference by one cycle to a comparison unit 75 to which also a value of 0 is supplied. Thereby, in the case the anti-windup difference is positive (more than 0), which is evaluated in the comparison unit 75, the integrator unit 33 of the integrator portion 3 is reset (step S4) to a predetermined value, preferably to a value of 0. The resetting is performed by applying a reset signal to the respective input of the integrator unit 33.

A resetting of the integrator unit 33 can also be carried out by setting the integrator value to a predetermined value or to a value depending on the limitation of the limiter unit 6, e.g. on the limiter difference between the limited control device output out and the unlimited control output provided by the summing unit, i.e. output of the first anti-windup subtraction unit 71.

The resetting of the integrator unit 33 leads to a sudden change of the output of the summing unit 5, i.e. unlimited control device output. As the amount of change is within the range being limited by the limiter unit 6 the limited control device output out is not affected by the resetting.

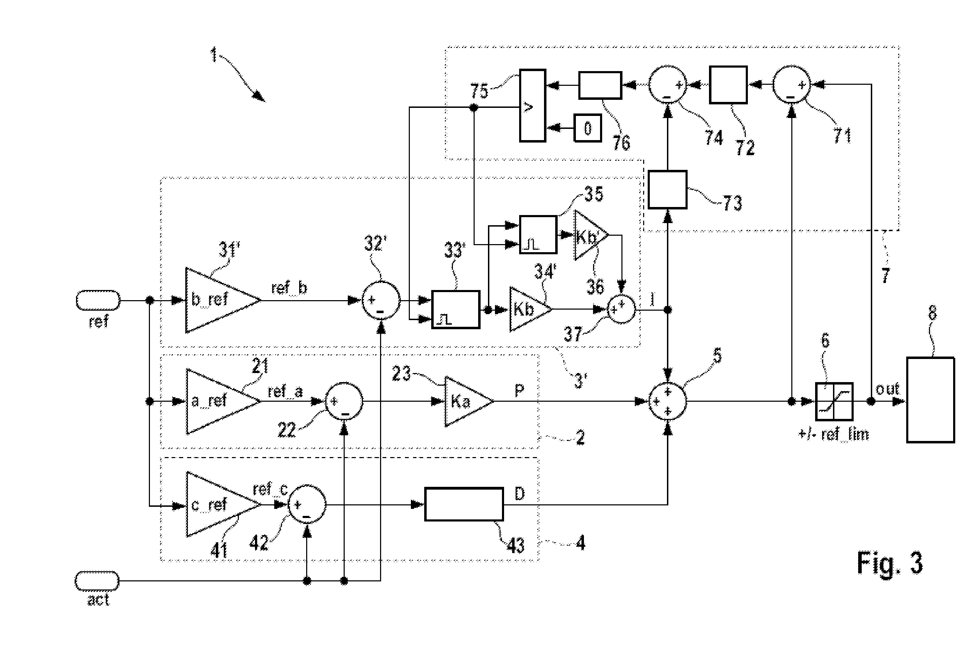

In Fig. 3 a control device is shown which is similar to that which is shown in Fig. 1. The difference between the embodiments of Fig. 3 and Fig. 1 is that the embodiment of Fig. 3 has two integrator units in an integrator portion 3' which are cascaded. Cascaded integrators are commonly used in state space controllers.

The integrator portion 3' includes a second amplification unit 31', a second difference unit 32', a integrator unit 33', and a second multiplication unit 34' which correspond to the second amplification unit 31, a second difference unit 32, an integrator unit 33 and a second multiplication unit 34 of the embodiment of Fig. 1. Moreover, the integrator portion 3' of Fig. 3 includes apart from the first integrator unit 33' a second integrator unit 35. The output of the first integrator unit 33' is coupled to an input of the second integrator unit 35. The outputs of both integrator units 33', 35 are coupled with the first multiplication unit 34' and a further multiplication unit 36, respectively to provide different integration constants Kb, Kb' to the integrator units 33', 35.

The integrator outputs applied to the integrator constants Kb, Kb' are summed in a integrator summing unit 37 and the summed integrator outputs are provided as the integrator output of the integrator portion. If the control device of Fig. 3 is operating in a saturation region wherein the integrator output is lower than the difference between the limited control device output and the unlimited control device output then both integrator units 33', 35 are reset to a predetermined value, preferably to the value 0 as described above.

### Reference list

- 1: Control device
- 2: Proportional portion
- 3: Integrator portion
- 4: Derivative portion
- 5: Summing unit
- 6: Limiter unit
- 7: Anti-windup unit
- 21: First amplification unit
- 22: First difference unit
- 23: First multiplication unit
- 31: Second amplification unit
- 32: Second difference unit
- 33: Integrator unit
- 34: Second multiplication unit
- 35: Second integrator unit
- 36: Further multiplication unit
- 37: Integrator summing unit
- 41: Third amplification unit
- 42: Third difference unit
- 43: Derivative unit
- 71: First anti-windup subtraction unit
- 72: First absolute value calculation unit
- 73: Second absolute value calculation unit
- 74: Second anti-windup subtraction unit
- 75: Comparison unit
- 76: Delay unit

## Claims

1. Control device (1) for feedback control of a system (8), comprising:
- a proportional portion (2) for providing a proportional value (P) depending on an actual input value (act) indicating an actual state of the system and on a reference input value (ref) indicating a desired state of the system;
- an integrator portion (3, 3') having at least one integrator unit (33) for integrating a value depending on the actual input value (act) and the reference input value (ref) to obtain an integrator value (I);
- a limiting means (6) for limiting a control output, wherein the control output is determined based on the proportional value (P) and the integrator value (I);
- an anti-windup unit (7) for resetting the integrator unit to a predetermined value if the limiting means (6) is actually limiting the control output.

2. Control device according to claim 1, wherein the anti-windup unit (7) is adapted to reset the integrator unit (33) to a predetermined value if the absolute value of a limiting difference, indicating the limiting by the limiting means (6), is more than the absolute value of the integrator value (I).

3. Control device according to claim 1 or 2, wherein the limiting means is a limiter unit (6) limiting the control output according to a predetermined range.

4. Control device according to claim 1 or 2, wherein the limiting means is included in the system (8) to be controlled wherein the limiting difference is predetermined or provided by the system (8).

5. Control device according to one of the claims 1 to 4, wherein the limiting difference is calculated by means of the control output and the limited control output.

6. Control device according to one of the claims 1 to 5, wherein the control device (1) further includes a derivative portion (4) for differentiating a value depending on the actual input value (act) and the reference input value (ref) to obtain a derivative value (D), wherein the control device output is calculated depending on the derivative value (D).

7. Control device according to one of the claims 1 to 6, wherein a summing unit (5) is provided to determine the control output by at least summing up the proportional value (P) and the integrator value (I).

8. Control device according to one of the claims 1 to 7, wherein the integrator portion (3, 3') has more than one integrator unit (33,35) which are arranged in an cascaded manner.

9. Control system comprising:
- a control device (1) according to one of the claims 1 to 8; and
- a system (8) to be controlled.

10. Method for operating a control device (1) for feedback control of a system (8), comprising the steps of:
- providing a proportional value depending on an actual input value (act) indicating an actual state of the system (8) and on a reference input value (ref) indicating a desired state of the system (8);
- integrating a value depending on the actual input value (act) and the reference input value (ref) to obtain an integrator value (I);
- limiting (S3) a control output, wherein the control output is determined (S1) by means of the proportional value (P) and the integrator value (I);
- resetting (S4) the integrated value to a predetermined value if the limiting of the control output changes the value of the control output.

11. Method according to claim 10, wherein the resetting the integrated value (I) to a predetermined value is carried out if the absolute value of a limiting difference, indicating the limiting of the control output, is more than the absolute value of the integrator value (I).
